# EUROPÄISCHE PATENTSCHRIFT

(11) **EP 3 928 904 B1**
(45) Veröffentlichungstag und Bekanntmachung des Hinweises auf die Patenterteilung: **04.12.2024**
(21) Anmeldenummer: 21180800.1
(22) Anmeldetag: 22.06.2021
(51) Int. Cl.: B23C 5/24, B23F 19/00, B23F 21/00, B23F 21/12, B23F 23/10, B23F 23/12

(54) **WERKZEUG ZUM ERZEUGEN VON HINTERLEGUNGEN AN ZÄHNEN EINER VERZAHNUNG EINES ZAHNRADFÖRMIGEN WERKSTÜCKS UND VERFAHREN ZUM GLEICHZEITIGEN ERZEUGEN VON MINDESTENS ZWEI HINTERLEGUNGEN AN DEN ZÄHNEN DES WERKSTÜCKS**
TOOL FOR CREATING UNDERCUTS ON TEETH OF A GEAR-SHAPED WORKPIECE AND METHOD FOR SIMULTANEOUSLY FORMING AT LEAST TWO UNDERCUTS ON THE TEETH OF THE WORKPIECE
OUTIL PERMETTANT DE CRÉER DES SUPPORTS SUR LES DENTS D'UNE DENTURE D'UNE PIÈCE EN FORME DE ROUE DENTÉE ET PROCÉDÉ POUR CRÉER SIMULTANEMENT AU MOINS DEUX SUPPORTS SUR LES DENTS DE LA PIÈCE

(30) Priorität: 22.06.2020 DE 102020116413
(43) Veröffentlichungstag der Anmeldung: 29.12.2021
(73) Patentinhaber: Präwema Antriebstechnik GmbH, 37269 Eschwege/Werra (DE)
(72) Erfinder: Schieke, Jörg, 99092 Erfurt-Marbach (DE); Reinhardt, Jörg, 99826 Berka v.d.H. (DE)
(74) Vertreter: Cohausz & Florack

(56) Entgegenhaltungen:
- DE-A1- 10 108 103
- DE-A1- 10 127 973
- DE-A1- 102004 057 836
- DE-A1- 102005 025 000
- US-B2- 9 296 045

## Beschreibung

Die Erfindung betrifft ein Werkzeug zum Erzeugen von Hinterlegungen an Zähnen einer Verzahnung eines zahnradförmigen Werkstücks, wobei das Werkzeug einen zapfenartig langgestreckt ausgebildeten und koaxial zur zentralen Längsachse des Werkzeugs ausgerichteten Werkzeugträger und mindestens zwei Schneiden umfasst, die im Gebrauch mit dem jeweils zu bearbeitenden Zahn in spanabhebenden Eingriff kommen, wobei die Schneiden in Längsrichtung des Werkzeugträgers beabstandet zueinander an dem Werkzeugträger gehalten sind und sich jeweils über eine Teillänge des Werkzeugträgers erstrecken.

Ebenso betrifft die Erfindung ein Verfahren zum gleichzeitigen Erzeugen von mindestens zwei Hinterlegungen an jeweils einem der Zähne einer Verzahnung eines zahnradförmigen Werkstücks mittels eines Werkzeugs der voranstehend erläuterten Art.

Typischerweise handelt es sich bei den mit einem erfindungsgemäßen Werkzeug oder durch Anwendung eines erfindungsgemäßen Verfahrens zu bearbeitenden Zahnrädern um so genannte "Schiebemuffen". Diese werden in Schaltgetrieben von Fahrzeugen benötigt, die durch einen Verbrennungsmotor angetrieben sind. Um sicherzustellen, dass das zahnradförmige Werkstück, das für eine Kraftübertragung mit der Schiebemuffe in Eingriff gebracht wird, auch unter den im Gebrauch auftretenden hohen Lasten in Eingriff mit der Schiebemuffe bleibt, sind an den Zahnflanken von zumindest einigen der Zähne der Schiebemuffe üblicherweise so genannte "Hinterlegungen" eingeformt. Diese nach Art von Ausnehmungen oder Absätzen mit exakt bestimmter Geometrie ausgebildeten Formelemente verhindern eine ungewollte axiale Verschiebung des mit der Schiebemuffe kämmenden zahnradförmigen Werkstücks. Die Hinterlegungen sind dabei typischerweise in die an die jeweilige Stirnseite des zahnradförmigen Werkstücks angrenzenden Endbereichen der Zahnflanken der Zähne der Verzahnung eingeformt.

Ein Werkzeug gemäß dem Oberbegriff des Anspruchs 1 und ein Verfahren gemäß dem Oberbegriff des Anspruchs 5 der eingangs angegebenen Art sind beispielsweise aus der DE 101 27 973 A1 bekannt. Die dort dargestellte Verwendung eines Werkzeugs, das zwei Schneiden umfasst, erlaubt es, zeitgleich zwei Hinterlegungen an einem Zahnrad zu erzeugen. Zu diesem Zweck sind die Schneiden beim Stand der Technik in einer Linie angeordnet, die achsparallel zur mit dessen Drehachse übereinstimmenden zentralen Längsachse des Werkzeugs ausgerichtet ist, wobei die in Längsrichtung des Werkzeugträgers gemessene Breite der Schneiden der Breite der von ihnen in die jeweilige Zahnflanke zu schneidenden Hinterlegung und der Abstand zwischen den Schneiden dem Abstand entspricht, der zwischen den an der jeweiligen Zahnflanke abzubildenden Hinterlegungen bestehen soll. Gleichzeitig können die Schneiden zusätzlich entsprechend der Form der abzubildenden Hinterlegungen ausgebildet sein. Sollen beispielsweise Hinterlegungen erzeugt werden, deren Tiefe ausgehend von dem der jeweiligen Stirnseite des Zahnrads zugeordneten Rand der Hinterlegung in Richtung der Breitenmitte der mit den Hinterlegungen versehenen Zahnflanke zunimmt, so kann dies durch Schneiden bewirkt werden, deren Dicke in entsprechender Weise ausgehend von ihrer der jeweiligen Stirnseite des Zahnrads zugeordneten Schmalseite in Richtung der gegenüberliegenden Schmalseite zunimmt, so dass die Schneide eine in Draufsicht auf die Schneide schräg verlaufende Schneidkante aufweist.

Um im Gebrauch eines mit Hinterlegungen versehenen zahnradförmigen Werkstücks dessen einwandfreie Funktion zu gewährleisten, müssen Form, Lage und Ausrichtung der Hinterlegungen exakt mit den Sollvorgaben übereinstimmen, die sich aus der konstruktiven Auslegung des Getriebes ergeben. Die Einhaltung dieser Vorgabe erweist sich dann als schwierig, wenn die im Gebrauch auftretenden Lasten so groß sind, dass sich das Werkzeug selbst oder die Werkzeugaufnahme, in der das Werkzeug im Gebrauch eingespannt ist, sich verformen. Solche Verformungen treten insbesondere dann auf, wenn der Werkzeugträger eine große Länge aufweist, die zu hohen Biege- oder Torsionsbelastungen in Folge der bei der spanenden Bearbeitung der Zähne des zahnradförmigen Bauteils auftretenden Querkräfte führen.

Werkzeuge, deren Werkzeugträger mit einer vergrößerten Länge und damit einhergehend vergrößerten Auskragung in Bezug auf die Einspannung aufweisen, in denen sie gehalten sind, werden beispielsweise zur Bearbeitung der Zahnflanken von Zähnen von Schiebemuffen oder vergleichbaren Zahnrädern benötigt, die vergleichbar breit sind. Solche breiten Zahnräder werden beispielweise in Schaltgetrieben von schweren Maschinen benötigt, um die bei deren Gebrauch auftretenden Lasten aufnehmen zu können. Um bei derart breiten Zahnrädern an ausgewählten Zähnen gleichzeitig zwei Hinterlegungen erzeugen zu können, muss ein Werkzeug verwendet werden, dessen Werkzeugträger eine der Breite des zahnradförmigen Werkstücks entsprechende Länge besitzt. Insbesondere die sich daraus ergebende schlanke, langgestreckte Form des Werkzeugträgers bringt die Gefahr mit sich, dass der Werkzeugträger oder die das Werkzeug haltende Werkzeugaufnahme sich bei der Bearbeitung verformen. Diese Verformung kann in einer Verbiegung quer zu seiner zentralen Längsachse oder in einer Tordierung des Werkzeugs um seine zentrale Längsachse bestehen, wobei sich diese Verformungsarten auch überlagern können.

Aus dem Stand der Technik ist zudem die DE 10 2005 025 000 A1 bekannt, diese offenbart ein Werkzeug mit Feineinstellung.

Vor dem Hintergrund des voranstehend erläuterten Standes der Technik hat sich die Aufgabe ergeben, ein Werkzeug zu schaffen, das die hochpräzise, gleichzeitige Erzeugung von zwei Hinterlegungen an den Zahnflanken der Zähne eines zahnradförmigen Werkstücks unabhängig von deren Breite ermöglicht.

Ebenso sollte ein Verfahren genannt werden, das es erlaubt, auch mit einem Werkzeug, das einen filigran geformten, langgestreckten Werkzeugträger aufweist, hochpräzise gleichzeitig zwei Hinterlegungen an den Zahnflanken von Zähnen eines zahnradförmigen Werkstücks zu erzeugen.

Die Erfindung hat diese Aufgabe durch das in Anspruch 1 angegebene Werkzeug und das in Anspruch 5 angegebene Verfahren gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßes Werkzeug zum Erzeugen von Hinterlegungen an Zähnen einer Verzahnung eines zahnradförmigen Werkstücks umfasst demnach in Übereinstimmung mit dem eingangs dargelegten Stand der Technik einen zapfenartig langgestreckt ausgebildeten und koaxial zur zentralen Längsachse des Werkzeugs ausgerichteten Werkzeugträger und mindestens zwei Schneiden, die im Gebrauch mit dem jeweils zu bearbeitenden Zahn des zahnradförmigen Werkstücks in spanabhebenden Eingriff kommen, wobei die Schneiden in Längsrichtung des Werkzeugträgers beabstandet zueinander an dem Werkzeugträger gehalten sind und sich ihre Breite jeweils über eine Teillänge des Werkzeugträgers erstrecken.

Erfindungsgemäß ist bei einem solchen Werkzeug nun die Position mindestens einer der Schneiden zum Ausgleich von Verformungen des Werkzeugträgers, die im Gebrauch auftreten, in Relation zur anderen Schneide verstellbar.

In entsprechender Weise werden bei einem erfindungsgemäßen Verfahren jeweils mindestens zwei Hinterlegungen gleichzeitig an den Zähnen einer Verzahnung eines zahnradförmigen Werkstücks mittels eines um seine zentrale Längsachse rotierenden Werkzeugs erzeugt, wobei das Werkzeug einen zapfenartig langgestreckt ausgebildeten und koaxial zur zentralen Längsachse des Werkzeugs ausgerichteten Werkzeugträger und mindestens zwei Schneiden umfasst, die im Gebrauch mit dem jeweils zu bearbeitenden Zahn in spanabhebenden Eingriff kommen, wobei die Schneiden in Längsrichtung des Werkzeugträgers beabstandet zueinander an dem Werkzeugträger gehalten sind und sich jeweils über eine Teillänge des Werkzeugträgers erstrecken.

Erfindungsgemäß wird nun für ein solches Verfahren ein erfindungsgemäßes Werkzeug verwendet und aufbauend darauf werden mindestens folgende Arbeitsschritte absolviert:
a) Ermitteln der Biege- und/oder Torsionsverformung, die der Werkzeugträger oder die Einspannung, in der das Werkzeug gehalten ist, bei der Erzeugung der Hinterlegungen erfährt;
b) Einstellen der Position einer verstellbaren Schneide des Werkzeugs in Bezug auf die jeweils andere Schneide des Werkzeugs unter Berücksichtigung der im Arbeitsschritt a) ermittelten Verformung derart, dass die Position und Form der an den Zähnen des Zahnradtyps zu erzeugenden Hinterlegungen jeweils eine Sollvorgabe erfüllen;
c) Erzeugen der Hinterlegungen an den Zähnen des zahnradförmigen Werkstücks.

Mit der Erfindung steht somit ein Hinterlegewerkzeug zur Verfügung, das an den Zähnen eines zahnradförmigen Werkstücks die simultane Erzeugung zweier Hinterlegungen ermöglicht, bei dem es sich typischerweise um eine Schiebemuffe für ein Schaltgetriebe handelt. Das erfindungsgemäße Werkzeug erlaubt dabei auch bei besonders breiten Zähnen, die einen langgestreckten, schlanken Werkzeugträger erfordern, die Erzeugung von Hinterlegungen, die auch strengsten Anforderungen an ihre Geometrie, Position und Ausrichtung erfüllen. Dies betrifft insbesondere die Winkellagen der Hinterlegungen, für die sich mit einem erfindungsgemäßen Werkzeug optimale Übereinstimmungen mit den jeweiligen Sollvorgaben gewährleisten lassen.

Die Erfindung geht von der Erkenntnis aus, dass es für eine exakte Abbildung von zwei Hinterlegungen an einer Zahnflanke eines Zahnradzahns nicht erforderlich ist, den Werkzeugträger oder die Werkzeugaufnahme so auszusteifen, dass sie sich unter den im Gebrauch auftretenden Lasten nicht verformen. Vielmehr reicht es nach den Erkenntnissen der Erfindung aus, mindestens eine der Schneiden an dem Werkzeugträger eines erfindungsgemäßen Werkzeugs in Bezug auf die jeweils andere Schneide so auszurichten, dass Geometriefehler ausgeglichen werden, die ohne geeignete Gegenmaßnahme in Folge der erfindungsgemäß hingenommenen Verformung des Werkzeugs oder der Werkzeugaufnahme unvermeidbar auftreten würden.

Um eine solche Ausrichtung mit möglichst großer Variabilität zu ermöglichen und damit einhergehend ein erfindungsgemäßes Werkzeug für die Bearbeitung unterschiedlicher Typen von zahnradförmigen Werkstücken, insbesondere Schiebemuffen, und zum Einsatz in unterschiedlichen Maschinen mit unterschiedlichen Werkstückaufnahmen geeignet zu machen, kann bei einem erfindungsgemäßen Werkzeug die Position mindestens einer der Schneiden in Bezug auf die jeweils andere verändert werden.

Typischerweise ist bei einem erfindungsgemäßen Werkzeug die erste Schneide in einem an das freie Ende des Werkzeugträgers angeordneten Bereich befestigt, während die zweite Schneide im dem gegenüberliegenden Ende des Werkzeugträgers zugeordneten Endbereich angeordnet ist, der üblicherweise an einen Einspannzapfen angeschlossen ist, der zum Einspannen des Werkzeugs in eine Werkzeugaufnahme dient. Dabei kann zwischen dem Einspannzapfen und dem Werkzeugträger ein umlaufender Absatz vorgesehen sein, der den Übergang zwischen dem Werkzeugträger und dem Einspannzapfen bildet. Der umlaufende Absatz kann dabei nach Art eines in radialer Richtung gegenüber dem Zapfen vorstehenden Kragens ausgebildet sein, der einen Anschlag bildet, bis zu dem der Einspannzapfen in die Werkzeugaufnahme eingeschoben werden kann.

Bei einem erfindungsgemäßen Werkzeug treten die größten Verformungen aufgrund von dessen schlanker Form im Bereich des freien Endes des Werkzeugs auf. Bevorzugt ist daher mindestens die Position der dort vorgesehenen Schneide in erfindungsgemäßer Weise verstellbar, um die durch die Verformung des Werkzeugträgers oder der Werkzeugaufnahme andernfalls verursachten Formfehler der zu erzeugenden Hinterlegungen zu kompensieren. Dagegen kann die andere, im Gebrauch nahe der Einspannung des Werkzeugs angeordnete Schneide in der Regel fest montiert werden, da in dem zur Einspannung eng benachbarten Bereich in der Praxis nur vernachlässigbare Verformungen des Werkzeugträgers eintreten. Die bei dieser Ausgestaltung feststehende, unveränderlich nahe dem zur Einspannung vorgesehenen Einspannzapfen an dem Werkzeugträger montierte Schneide bildet dann einen festen Bezug für die Verstellung der veränderlich positionierbaren Schneide. Auf diese Weise wird die Justage von der Position der verstellbaren Schneide besonders einfach. Dagegen kann es beispielsweise im Fall, dass der wesentliche Teil der Verformung in der Werkzeugaufnahme stattfindet, ebenso zweckmäßig sein, jede der Schneiden eines erfindungsgemäßen Werkzeugs verstellbar zu machen. Auf diese Weise können auch die komplexen Formfehler der zu erzeugenden Hinterlegungen ausgeglichen werden, die durch die Verformung der Werkzeugaufnahme und die damit einhergehende Lageabweichung des Werkzeugs von seiner Solllage verursacht würden.

Abhängig von den im Gebrauch auftretenden Verformungen des Werkzeugträgers kann es zweckmäßig sein, eine Verstellbarkeit der verstellbaren Schneide in bezogen auf die zentrale Längsachse des Werkzeugs radialer Richtung (zur Kompensation einer Verbiegung des Werkzeugträgers oder der Werkzeugaufnahme) oder gemäß dem Patentanspruch 1 eine Verstellbarkeit der verstellbaren Schneide in Umfangsrichtung des Werkzeugträgers (zur Kompensation einer Tordierung des Werkzeugträgers) vorzusehen, wobei diese beiden Möglichkeiten einer Verstellung der Position der jeweils verstellbaren Schneide auch miteinander kombiniert werden können.

Die sich im Gebrauch in Folge von Biege- und/oder Torsionsverformung einstellende Verformung des Werkzeugs oder der Werkzeugaufnahme und die damit einhergehende Abweichung der Position der Schneiden, insbesondere der verstellbaren Schneide, von der Sollposition, die sich im Gebrauch aufgrund der dabei einstellenden Belastungen ergibt, kann im Arbeitsschritt a) des erfindungsgemäßen Verfahrens durch praktische Versuche oder rechnerisch, beispielsweise durch eine computergestützte Simulation, in an sich bekannter Weise ermittelt werden.

Die Einstellung der Position der jeweils mindestens einen verstellbaren Schneide des Werkzeugs in Bezug auf die jeweils andere Schneide des Werkzeugs erfolgt dann im Arbeitsschritt b) unter Berücksichtigung der im Arbeitsschritt a) ermittelten Verformung derart, dass die Position und Form der an den Zähnen des Zahnradtyps zu erzeugende Hinterlegung jeweils eine Sollvorgabe erfüllen.

Für die Verstellung kann die jeweils verstellbare Schneide an einem Träger gehalten sein, der beispielsweise mittels einer lösbaren, kraft- und /oder formschlüssig wirkenden Verbindung, wie beispielsweise einer Schraub- oder Klemmverbindung, in unterschiedlichen Stellungen an dem Werkzeugträger positioniert werden kann.

Bei einem entsprechend eingestellten erfindungsgemäßen Werkzeug weicht somit im unbenutzten, unbelasteten Zustand die Stellung mindestens einer der Schneiden von der Sollposition ab. Jedoch stellt sich diese Sollposition bei der Bearbeitung des zahnradförmigen Werkstücks (Arbeitsschritt c)) im Gebrauch in Folge der dabei auftretenden Verformungen des Werkzeugs oder der Werkzeugaufnahme selbsttätig ein. Infolgedessen werden bei der anschließenden Bearbeitung der Zahnräder optimale Arbeitsergebnisse erhalten, ohne dass es dazu weiterer Maßnahmen bedarf. So eignen sich das erfindungsgemäße Werkzeug und das erfindungsgemäße Verfahren insbesondere für eine Serienbearbeitung von zahnradförmigen Werkstücken, da die auf Grundlage der im Arbeitsschritt a) einmal erfolgte Ermittlung der Verformung von Werkstück oder Werkstückaufnahme im Arbeitsschritt b) durchgeführte Einstellung der Position der jeweils verstellbaren Schneide für alle gleichgestalteten Werkstücke einer Serie gilt (Arbeitsschritt c)).

Gemäß einer praxisgerechten Ausgestaltung der Erfindung beträgt der in Längsrichtung des Werkzeugträgers, d.h. achsparallel zur zentralen Längsachse des Werkzeugs, gemessene Abstand der Schneiden zueinander mindestens dem Vierfachen der Länge der Schneiden, wobei Abstände zwischen den Schneiden, die höchstens dem Fünfzehnfachen der Breite der Schneiden entsprechen, die in der Praxis üblicherweise auftretenden Bearbeitungsaufgaben abdecken.

Dabei beträgt die in Längsrichtung gemessene Breite B der Schneiden typischerweise höchstens 20 % der Länge des Werkzeugträgers, wobei in der Praxis die Schneiden eine Breite von typischerweise mindestens 5 mm aufweisen. So hat der Werkzeugträger eines erfindungsgemäßen Werkzeugs typischerweise eine Länge von mindestens 25 mm, inbesondere mindestens 30 mm, wobei Längen von bis zu 200 mm die in der Praxis auftretenden Bearbeitungsaufgaben abdecken. Die Durchmesser der Werkzeugträger erfindungsgemäßer Werkzeuge betragen dabei typischerweise bis zu 50 mm, so dass das aus der Länge Lwt und dem Durchmesser Dwt gebildete Verhältnis Lwt/Dwt typischerweise 0,5 - 4 beträgt.

Nachfolgend wird die Erfindung anhand einer ein Ausführungsbeispiel zeigenden Zeichnung näher erläutert. Es zeigen jeweils schematisch und nicht maßstäblich:

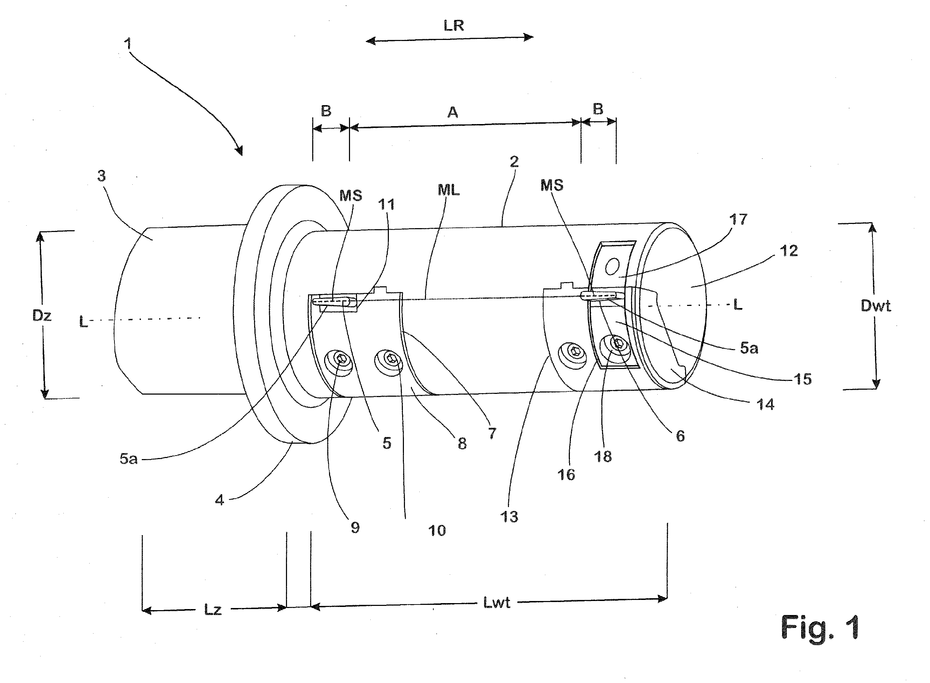

- Fig. 1: ein Werkzeug zum Erzeugen von Hinterlegungen an Zähnen der Verzahnung einer Schiebemuffe in einer perspektivischen Darstellung;
- Fig. 2: das Werkzeug gemäß Fig. 1 in einer frontalen Ansicht;
- Fig. 3: das Werkzeug gemäß Fig. 1 in einer Draufsicht von oben.

Das Werkzeug 1 zum Erzeugen von Hinterlegungen umfasst einen zapfenartigen, langgestreckten Werkzeugträger 2, der eine zylindrische Grundform aufweist und koaxial zur zentralen Längsachse L des Werkzeugs 1 ausgerichtet ist. Die zentrale Längsachse L des Werkzeugs 1 fällt mit der Drehachse zusammen, um die das Werkzeug 1 im Gebrauch dient.

Der Werkzeugträger 2 ist von einem Einspannzapfen 3 getragen, der zum Einspannen des Werkzeugs 1 in eine hier nicht gezeigte Werkzeugaufnahme einer ebenso nicht dargestellten, konventionell ausgebildeten Werkzeugmaschine dient. Der Durchmesser Dz des Einspannzapfens 3 ist größer als der Durchmesser Dwt des Werkzeugträgers 2, während die achsparallel zur Längsachse L gemessene Länge Lwt des Werkzeugträgers 2 etwa 3,5 mal größer ist als die ebenfalls achsparallel zur Längsachse L gemessene Länge Lz des Einspannzapfens 3. Den Übergang zwischen dem Werkzeugträger 2 und dem Einspannzapfen 3 bildet ein nach Art eines umlaufenden Kragens ausgebildeter Absatz 4, dessen Durchmesser größer ist als der Durchmesser Dz des Einspannzapfens 3, so dass der Absatz 4 radial nach außen über den Einspannzapfen 3 hinaussteht und einen Anschlag bildet, bis zu dem der Einspannzapfen 3 für den Gebrauch in die nicht dargestellte Werkzeugaufnahme eingeschoben werden kann.

An dem Werkzeugträger 2 sind zwei Schneiden 5,6 befestigt, die im Gebrauch an einer Zahnflanke des jeweils bearbeiteten Zahns einer hier nicht gezeigten Schiebemuffe simultan durch Abtragen von Material des Zahns zwei Hinterlegungen erzeugen. Beim hier gezeigten Beispiel sind die Hinterlegungen bezogen auf die Mitte der Breite der Zahnfläche spiegelsymmetrisch geformt. Sie können jedoch genauso auch unsymmetrisch angeordnet oder ausgebildet sein.

Dazu ist in einem an den Absatz 4 angrenzenden, dem Einspannzapfen 3 zugeordneten Endbereich des Werkzeugträgers 2 eine Ausnehmung 7 vorgesehen, in der passgenau ein Trägerelement 8 sitzt. Dieses Trägerelement 8 weist eine gebogene Außenfläche auf, die sich in die Außenkontur des zylinderförmigen Werkzeugträgers 2 einpasst. Mittels Schrauben 9,10 ist das Trägerelement 8 an dem Werkzeugträger 2 fixiert. An seinem einen parallel zur Längsachse L ausgerichteten Rand sitzt in einem Ausschnitt 11 des Trägerelements 8 die Schneide 5 und ist dort durch das Trägerelement 8 in ihrer Lage und Winkelstellung β in Bezug auf die Längsachse L des Werkzeugträgers 2 fixiert.

Für die Befestigung der zweiten Schneide 6 ist in einem an die freie Stirnseite 12 des Werkzeugträgers 2 angrenzenden Endbereich eine weitere Ausnehmung 13 vorgesehen, in der ein Trägerelement 14 passgenau sitzt, das entsprechend dem Trägerelement 8 so geformt ist, dass seine Außenfläche sich in die Außenkontur des Werkzeugträgers 2 einpasst und mittels einer Schraube an dem Werkzeugträger 2 fixiert ist. Die Schneide 6 ist dabei von einem Einsatzstück 15 gehalten, das in einer Ausnehmung 16 des Trägerelements 14 sitzt. Die Ausnehmung 16 erstreckt sich in Umfangsrichtung U des Werkzeugträgers 2 und wird durch eine Ausnehmung 17 ergänzt, die in den Werkzeugträger 2 eingeformt ist. Durch Verschieben des Einsatzstücks 15 in Umfangsrichtung U innerhalb der Ausnehmungen 16,17 kann so die Winkelstellung ß' der Schneide 6 in Bezug auf die zentrale Längsachse L und damit einhergehend in Bezug auf die Winkelstellung β der feststehenden ersten Schneide 5 verstellt werden.

Zusätzlich kann das Einsatzstück 15 mit der von ihm getragenen, in ihrer Position verstellbaren Schneide 6 in bezogen auf die zentrale Längsachse L radialer Richtung R verstellt werden. Die Fixierung des Einsatzstücks 15 und der Schneide 6 in der jeweiligen Winkelposition ß' und der jeweiligen radialen Stellung an dem Werkzeugträger 2 erfolgt wiederum durch eine Schraube 18.

Die Schneiden 5,6 sind jeweils in Längsrichtung LR des Werkzeugträgers 3 und spiegelsymmetrisch zueinander ausgerichtet. Dabei weisen die Schneiden 5,6 an ihren voneinander abgewandten Schmalseiten eine geringere Dicke auf als an ihren einander zugewandten Schmalseiten, so dass die Schneidkanten 5a,6a der Schneiden 5,6 bezogen auf die Ausrichtung der zentralen Längsachse L schräg ausgerichtet sind.

Der Abstand A zwischen den einander zugeordneten breiteren Schmalseiten der Schneiden 5,6 entspricht dabei etwa dem Sechsfachen der achsparallel zur Längsachse L gemessenen Breite B der Schneiden 5,6, deren Breite B wiederum jeweils etwa 10 % der Länge Lwt des Werkzeugträgers 3 entspricht.

In Sollposition sind die Mittellinien MS der Schneiden 5,6 auf einer Linie ML ausgerichtet, die achsparallel zur zentralen Längsachse L ausgerichtet ist. In dieser Ausrichtung ergeben sich optimal gleichgestaltete Hinterlegungen an der Zahnflanke des jeweils zu bearbeitenden Zahns.

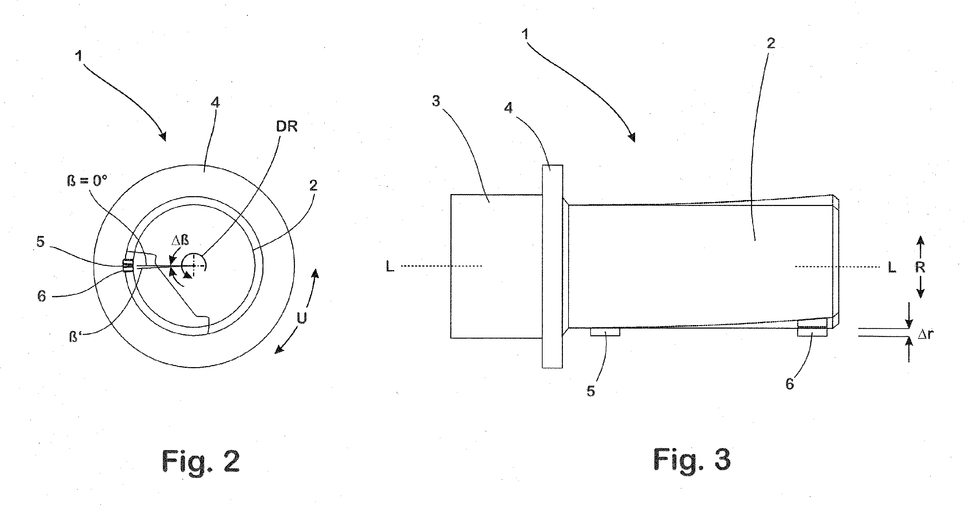

Im Gebrauch kann es aufgrund der Querkräfte und Momente, die bei der spanabhebenden Bearbeitung der Zähne der zu bearbeitenden Verzahnung auftreten, zu einer Verformung des Werkzeugträgers 2 durch Torsion (Fig. 2) oder Biegung (Fig. 3) kommen.

Im Fall der Torsion verdreht sich der Werkzeugträger 2 zu seiner vorderen freien Stirnseite 12 hin entgegen der Drehrichtung DR stärker als in seinem dem Einspannzapfen 3 zugeordneten Endbereich. Infolgedessen würde ohne Gegenmaßnahmen die Winkellage ß' der der freien Stirnseite 12 zugeordneten Schneide 6 in Bezug auf die zentrale Längsachse L von der ebenfalls auf die zentrale Längsachse L bezogenen Winkellage β = 0° der dem Einspannzapfen 3 zugeordneten, unverstellbaren Schneide 5 entgegen der Drehrichtung DR um einen Winkelbetrag Δß abweichen. Die dadurch sich ergebende Position der Schneide 6 ist in Fig. 2 durch gestrichelte Linien angedeutet.

Zum Ausgleich dieser durch die Torsionsverformung des Werkzeugträgers 2 gegenüber der Sollposition eintretenden Veränderung der Position der verstellbaren Schneide 6 wird das Einsatzstück 15 mit der Schneide 6 in Drehrichtung DR um den Winkelbetrag Δß in Umfangsrichtung U verschoben. Im nicht gebrauchten, unbelasteten Zustand weicht somit die Position der Schneide 6 von der Sollposition ab. Im Gebrauch befindet sich die Schneide 6 in Folge der dann eintretenden Torsionsverformung des Werkzeugträgers 2 jedoch in ihrer Sollposition, in der sie in Linie mit der feststehenden Schneide 5 ausgerichtet ist. Bei kleinen Abweichungen kann die sich durch die Torsionsverformung einstellende, prinzipiell einer Kreisbogenform folgende Lageänderung der Schneide 6 durch eine lineare Verstellung quer zu Werkzeuglängsachse L angenähert werden. Stellt sich heraus, dass trotz der auf diese Weise erfolgenden Verstellung die durch die Torsion eintretende Lageänderung der Schneide 6 nicht ausgeglichen werden kann, so kann zum Ausgleich eine der Bogenform folgende Umpositionierung der Schneide 6 vorgenommen werden.

Im Fall der Biegung wird entweder der Werkzeugträger 2 selbst zur freien Stirnseite 12 hin verbogen oder die hier nicht gezeigte Werkzeugaufnahme so verformt, so dass die Längsausrichtung der Längsachse des Werkzeugträgers 2 von der Solllage der zentralen Längsachse L abweicht. Die dadurch eintretende Verformung ist in Fig. 3 durch gestrichelte Linien beispielhaft dargestellt. Damit einhergehend würde ohne Gegenmaßnahmen die in Bezug auf die Längsachse L radiale Position r' der Schneide 6 um einen Abstand Δr von ihrer radialen Sollposition r abweichen.

Zum Ausgleich dieser Abweichung wird das Einsatzstück 15 mit der Schneide 6 um den Betrag Δr in radialer Richtung R bezogen auf die zentrale Längsachse L nach außen versetzt, so dass bei unbenutztem Werkzeug 1 die Position der verstellbaren Schneide 6 von ihrer Sollposition abweicht, sich die Schneide 6 im Gebrauch, d.h. bei der Bearbeitung der Zähne der Schiebemuffe, jedoch aufgrund der durch die dabei sich ergebende Biegeverformung eintretenden Veränderung ihrer Position in Sollposition befindet.

### BEZUGSZEICHEN

- 1: Werkzeug zum Erzeugen von Hinterlegungen
- 2: Werkzeugträger des Werkzeugs 1
- 3: Einspannzapfen des Werkzeugs 1
- 4: um laufender Absatz des Werkzeugs 1
- 5: feststehende, unverstellbare Schneide des Werkzeugs 1
- 5a,6a: Schneidkanten der Schneiden 5,6
- 6: variabel verstellbare Schneide des Werkzeugs 1
- 7: Ausnehmung des Werkzeugträgers 2
- 8: Trägerelement
- 9,10: Schrauben zur Befestigung des Trägerelement 8
- 11: Ausschnitt des Trägerelements 8
- 12: freie Stirnseite des Werkzeugträgers 2
- 13: Ausnehmung des Werkzeugträgers 2
- 14: Trägerelement
- 15: die Schneide 6 tragendes Einsatzstück
- 16: Ausnehmung des Trägerelements 14
- 17: Ausnehmung des Werkzeugträgers 2
- 18: Schraube zur Fixierung des Einsatzstücks 15

- ß: Winkelstellung der Schneide 5 in Bezug auf die Längsachse L
- ß': Winkelstellung der Schneide 6 in Bezug auf die Längsachse L
- Δß: Winkelbetrag
- Δr: Abstand
- A: Abstand zwischen den Schneiden 5,6
- B: Breite der Schneiden 5,6
- DR: Drehrichtung des Werkzeugs 1
- Dwt: Durchmesser des Werkzeugträgers
- Dz: Durchmesser des Einspannzapfens 3
- L: zentrale Längsachse des Werkzeugs 1
- LR: Längsrichtung
- Lwt: Länge des Werkzeugträgers 2
- Lz: Länge des Einspannzapfens 3
- MS: Mittellinien der Schneiden 5,6
- ML: achsparallel zur zentralen Längsachse L ausgerichtete Linie
- U: Umfangsrichtung des Werkzeugträgers 2
- R: radiale Richtung R

## Patentansprüche

1. Werkzeug zum Erzeugen von Hinterlegungen an Zähnen einer Verzahnung eines zahnradförmigen Werkstücks, wobei das Werkzeug (1) einen zapfenartig langgestreckt ausgebildeten und koaxial zur zentralen Längsachse (L) des Werkzeugs (1) ausgerichteten Werkzeugträger (2) und mindestens zwei Schneiden (5,6) umfasst, die im Gebrauch mit dem jeweils zu bearbeitenden Zahn des zahnradförmigen Werkstücks in spanabhebenden Eingriff kommen, wobei die Schneiden (5,6) in Längsrichtung (LR) des Werkzeugträgers (2) beabstandet zueinander an dem Werkzeugträger (2) gehalten sind und sich ihre Breite (B) jeweils über eine Teillänge des Werkzeugträgers (2) erstrecken, **dadurch gekennzeichnet, dass** die Position mindestens einer der Schneiden (6) zum Ausgleich von Verformungen des Werkzeugträgers (2), die im Gebrauch auftreten, in Relation zur anderen Schneide (5) verstellbar ist und dass die Position der verstellbaren Schneide (6) in Umfangsrichtung (U) des Werkzeugträgers (2) verstellbar ist.

2. Werkzeug nach Anspruch 1, **dadurch gekennzeichnet, dass** die Position der verstellbaren Schneide (6) in bezogen auf die zentrale Längsachse (L) radialer Richtung (R) verstellbar ist.

3. Werkzeug nach einem der voranstehenden Ansprüche, **dadurch gekennzeichnet, dass** der in Längsrichtung (LR) des Werkzeugträgers (2) gemessene Abstand (A) der Schneiden (5,6) zueinander mindestens dem Vierfachen der in Längsrichtung (LR) des Werkzeugträgers (2) gemessenen Breite (B) der Schneiden entspricht.

4. Werkzeug nach einem der voranstehenden Ansprüche, **dadurch gekennzeichnet, dass** die in Längsrichtung (LR) des Werkzeugträgers (2) gemessene Breite (B) der Schneiden (5,6) höchstens 20 % der Länge (Lwt) des Werkzeugträgers (2) beträgt.

5. Verfahren zum gleichzeitigen Erzeugen von mindestens zwei Hinterlegungen an den Zähnen einer Verzahnung eines zahnradförmigen Werkstücks mittels eines um seine zentrale Längsachse (L) rotierenden Werkzeugs (1), wobei das Werkzeug (1) einen zapfenartig langgestreckt ausgebildeten und koaxial zur zentralen Längsachse (L) des Werkzeugs (1) ausgerichteten Werkzeugträger (2) und mindestens zwei Schneiden (5,6) umfasst, die im Gebrauch mit dem jeweils zu bearbeitenden Zahn in spanabhebenden Eingriff kommen, wobei die Schneiden (5,6) in Längsrichtung des Werkzeugträgers (2) beabstandet zueinander an dem Werkzeugträger (2) gehalten sind und sich jeweils über eine Teillänge des Werkzeugträgers (2) erstrecken, **dadurch gekennzeichnet, dass** bei dem verwendeten Werkzeug (1) die Position mindestens einer der Schneiden (6) zum Ausgleich von Verformungen des Werkzeugträgers (2), die im Gebrauch auftreten, in Relation zur anderen Schneide (5) verstellbar ist und dass zur Erzeugung der Hinterlegungen mindestens folgende Arbeitsschritte absolviert werden:
a) Ermitteln der Biege- und/oder Torsionsverformung, die der Werkzeugträger (2) oder die Einspannung, in der das Werkzeug (1) gehalten ist, bei der Erzeugung der Hinterlegungen erfährt;
b) Einstellen der Position einer verstellbaren Schneide (6) des Werkzeugs (1) in Bezug auf die jeweils andere Schneide (5) des Werkzeugs (1) unter Berücksichtigung der im Arbeitsschritt a) ermittelten Verformung derart, dass die Position und Form der an den Zähnen des Zahnradtyps zu erzeugenden Hinterlegungen jeweils eine Sollvorgabe erfüllen;
c) Erzeugen der Hinterlegungen an den Zähnen des zahnradförmigen Werkstücks.

6. Verfahren nach Anspruch 5, **dadurch gekennzeichnet, dass** das zahnradförmige Werkstück eine Schiebemuffe für ein Schaltgetriebe ist.

## Claims

1. Tool for producing undercuts on teeth of a toothing of a gear-shaped workpiece, the tool (1) comprising a tool carrier (2) which is designed elongated like a pin and is aligned coaxially with the central longitudinal axis (L) of the tool (1) and at least two cutting edges (5, 6) which, in use, come into chip-removing engagement with the respective tooth of the gear-shaped workpiece to be machined, the cutting edges (5,6) are held on the tool carrier (2) at a distance from one another in the longitudinal direction (LR) of the tool carrier (2) and their width (B) extends in each case over a partial length of the tool carrier (2), **characterized in that** the position of at least one of the cutting edges (6) is adjustable in relation to the other cutting edge (5) in order to compensate for deformations of the tool carrier (2) which occur during use, and that the position of the adjustable cutting edge (6) is adjustable in the circumferential direction (U) of the tool carrier (2).

2. Tool according to claim 1, **characterized in that** the position of the adjustable cutting edge (6) is adjustable in a radial direction (R) relative to the central longitudinal axis (L).

3. Tool according to one of the preceding claims, **characterized in that** the distance (A) between the cutting edges (5, 6) measured in the longitudinal direction (LR) of the tool carrier (2) corresponds to at least four times the width (B) of the cutting edges measured in the longitudinal direction (LR) of the tool carrier (2).

4. Tool according to one of the preceding claims, **characterized in that** the width (B) of the cutting edges (5, 6) measured in the longitudinal direction (LR) of the tool carrier (2) is at most 20% of the length (Lwt) of the tool carrier (2).

5. Method for simultaneously producing at least two undercuts on the teeth of a toothing of a gear-shaped workpiece by means of a tool (1) rotating about its central longitudinal axis (L), wherein the tool (1) comprises a tool carrier (2), which is which is designed elongated like a pin and is aligned coaxially to the central longitudinal axis (L) of the tool (1), and at least two cutting edges (5, 6), which in use come into chip-removing engagement with the respective tooth to be machined, wherein the cutting edges (5,6) are held on the tool carrier (2) at a distance from one another in the longitudinal direction of the tool carrier (2) and each extend over a partial length of the tool carrier (2), **characterized in that** with the tool (1) used, the position of at least one of the cutting edges (6) can be adjusted in relation to the other cutting edge (5) to compensate for deformations of the tool carrier (2) which occur during use and that at least the following steps are carried out to produce the undercuts:
a) Determining the bending and/or torsional deformation which the tool carrier (2) or the clamping in which the tool (1) is held undergoes when the undercuts are produced;
b) Setting the position of an adjustable cutting edge (6) of the tool (1) in relation to the respective other cutting edge (5) of the tool (1), taking into account the deformation determined in step a), in such a way that the position and shape of the undercuts to be produced on the teeth of the gear type each fulfill a target specification;
c) Creating the undercuts on the teeth of the gear-shaped workpiece.

6. Method according to claim 5, **characterized in that** the gear-shaped workpiece is a sliding sleeve for a gearbox.

## Revendications

1. Outil pour la réalisation de dépouilles sur des dents d'une denture d'une pièce à usiner en forme de roue dentée, l'outil (1) comprenant un porte-outil (2), conçu en forme de tenon allongé et aligné coaxialement par rapport à l'axe longitudinal central (L) de l'outil (1) et au moins deux tranchants (5, 6) qui, lors de l'utilisation, entrent en prise, par l'enlèvement de copeaux, avec la dent respectivement à usiner de la pièce à usiner en forme de roue dentée, les tranchants (5, 6) étant maintenus espacés entre eux sur le porte-outil (2) dans le sens longitudinal (LR) du porte-outil (2) et dont la largeur (B) s'étend respectivement sur une longueur partielle du porte-outil (2), **caractérisé en ce que** la position d'au moins l'un des tranchants (6) est réglable par rapport à l'autre tranchant (5) afin de compenser les déformations du porte-outil (2) qui surviennent pendant l'utilisation et **en ce que** la position du tranchant réglable (6) est réglable dans le sens périphérique (U) du porte-outil (2).

2. Outil selon la revendication 1, **caractérisé en ce que** la position du tranchant réglable (6) peut être ajustée par rapport à l'axe longitudinal central (L) dans le sens radial (R).

3. Outil selon l'une quelconque des revendications précédentes, **caractérisé en ce que** la distance (A) entre les tranchants (5, 6), mesurée dans le sens longitudinal (LR) du porte-outil (2), correspond au moins au quadruple de la largeur (B) des tranchants, mesurée dans le sens longitudinal (LR) du porte-outil (2).

4. Outil selon l'une quelconque des revendications précédentes, **caractérisé en ce que** la largeur (B) des tranchants (5, 6), mesurée dans le sens longitudinal (LR) du porte-outil (2), représente au maximum 20 % de la longueur (Lwt) du porte-outil (2).

5. Procédé pour réaliser simultanément au moins deux dépouilles sur les dents d'une denture d'une pièce à usiner en forme de roue dentée au moyen d'un outil (1) tournant autour de son axe longitudinal central (L), l'outil (1) comprenant un porte-outil (2) en forme de tenon allongé et aligné coaxialement par rapport à l'axe longitudinal central (L) de l'outil (1) et au moins deux tranchants (5, 6) qui entrent en prise, par l'enlèvement de copeaux, avec la dent à usiner respectivement lors de l'utilisation, les tranchants (5, 6) étant maintenus espacés entre eux sur le porte-outil (2) dans le sens longitudinal du porte-outil (2), et s'étendant respectivement sur une longueur partielle du porte-outil (2), **caractérisé en ce que** lors de l'outil (1) utilisé, la position d'au moins l'un des tranchants (6) est réglable par rapport à l'autre tranchant (5) pour compenser les déformations du porte-outil (2) qui se produisent lors de l'utilisation, et **en ce que**, pour réaliser les dépouilles on effectue au moins les étapes de travail suivantes :
a) Détermination de la déformation en flexion et/ou en torsion subie par le porte-outil (2) ou le serrage dans lequel l'outil (1) est maintenu lors de la réalisation des dépouilles ;
b) Réglage de la position d'un tranchant réglable (6) de l'outil (1) par rapport à l'autre tranchant respectif (5) de l'outil (1) en tenant compte de la déformation déterminée à l'étape de travail a) de sorte que la position et la forme des dépouilles à réaliser sur les dents du type roue dentée répondent respectivement à une valeur de consigne ;
c) Réalisation des dépouilles sur les dents de la pièce en forme de roue dentée.

6. Procédé selon la revendication 5, **caractérisé en ce que** la pièce en forme de roue dentée est un manchon coulissant pour une boîte de vitesses mécanique.
